(19) Europäisches Patentamt / European Patent Office / Office européen des brevets

(11) **EP 4 744 996 A1**

(12) # DEMANDE DE BREVET EUROPEEN

(43) Date de publication:
**20.05.2026   Bulletin 2026/21**

(21) Numéro de dépôt: **24213415.3**

(22) Date de dépôt: **15.11.2024**

(51) Classification Internationale des Brevets (IPC):
**B60W 40/103** (2012.01)      **B60W 50/00** (2006.01)

(52) Classification Coopérative des Brevets (CPC):
**B60W 40/103; B60W 50/00;** B60W 2050/0062;
B60W 2520/14; B60W 2540/18

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(71) Demandeur: **Ampere SAS**
**92100 Boulogne-Billancourt (FR)**

(72) Inventeurs:
• **AMEYOE, Ablamvi**
**78084 Guyancourt cedex (FR)**
• **LEROY, Philippe**
**78084 Guyancourt cedex (FR)**
• **MOUTON, Xavier**
**78084 Guyancourt cedex (FR)**

(74) Mandataire: **Renault Group**
**Renault s.a.s.**
**1 avenue du Golf**
**FR TCR AVA 055**
**78084 Guyancourt Cedex (FR)**

(54) **PROCÉDÉ ET DISPOSITIF DE GESTION DU FONCTIONNEMENT D'UN ACTIONNEUR DE CHÂSSIS D'UN VÉHICULE AUTOMOBILE EN FONCTION DE L' ANGLE DE DÉRIVE DU VÉHICULE**

(57)     L'invention porte sur un procédé de gestion du fonctionnement d'au moins un actionneur de châssis (4) d'un véhicule automobile (1). L'invention concerne également un dispositif (100) mettant en œuvre un tel procédé ainsi qu'un véhicule automobile comprenant un tel dispositif.

[Fig. 1]

EP 4 744 996 A1

## Description

### Domaine technique de l'invention

La présente invention concerne le domaine des systèmes embarqués à bord des véhicules pour gérer leur fonctionnement au cours de la conduite. L'invention porte en particulier sur un procédé de gestion, par un dispositif informatique embarqué à bord d'un véhicule automobile, du fonctionnement d'au moins un actionneur de châssis du véhicule. L'invention concerne également un dispositif mettant en œuvre un tel procédé. L'invention s'applique aux véhicules automobiles tels que les véhicules terrestres à moteur, notamment les voitures.

### État de la technique antérieure

On sait que l'angle de dérive d'un véhicule détermine directement la stabilité du véhicule durant la conduite, autrement dit sa tenue de route. Aussi, lorsque l'on souhaite développer des systèmes d'aide à la conduite efficients et sûrs, il convient de pouvoir tenir compte de ce paramètre crucial qu'est l'angle de dérive. Or, jusqu'à présent, on détermine généralement l'angle de dérive d'un véhicule en équipant le véhicule de moyens de détection évolués, par exemple plusieurs antennes GPS ou un capteur optique. Cependant, compte tenu de leur coût, ces équipements ne sont pas appropriés pour être pouvoir être embarqués à bord de tous les véhicules de série, au risque sinon d'augmenter drastiquement le coût des véhicules de certaines gammes de véhicules moins onéreux et de ne plus correspondre alors aux capacités de financement d'une clientèle moins fortunée.

### Résumé de l'invention

L'invention vise à résoudre cette problématique. Elle a en particulier pour but de fournir une solution alternative pour pouvoir déterminer à moindre coût l'angle de dérive d'un véhicule automobile au cours de la conduite. Par ce biais, l'invention a pour objectif de contribuer à la fourniture de systèmes d'aide à la conduite de véhicules automobiles plus efficients et plus sûrs pour tous types de véhicules, en particulier ceux-qui s'adressent aux segments les moins aisés du marché.

Pour atteindre ces objectifs, l'invention concerne, selon un premier aspect, un procédé de gestion, par un dispositif informatique embarqué à bord d'un véhicule automobile, du fonctionnement d'au moins un actionneur de châssis du véhicule, le procédé comprenant les étapes de :

    i) obtenir des données caractérisant l'angle du volant du véhicule et des données caractérisant la vitesse de lacet du véhicule ;
    ii) alimenter un module de détermination dudit dispositif uniquement avec les données caractérisant l'angle du volant du véhicule et les données caractérisant la vitesse de lacet du véhicule afin d'obtenir des données caractérisant un l'angle de dérive du véhicule, ledit module ayant été préalablement entraîné au moyen d'un apprentissage supervisé ; et
    iii) gérer le fonctionnement dudit actionneur en fonction des données caractérisant l'angle de dérive du véhicule.

Selon une variante, ledit apprentissage peut être réalisé en établissant un modèle défini par un premier paramètre identifiant une contribution liée à l'angle du volant du véhicule et une première constante temporelle correspondante.

Selon une autre variante, ledit modèle peut être défini par un deuxième paramètre identifiant une contribution liée à la vitesse de lacet du véhicule et une deuxième constante temporelle correspondante.

Selon encore une autre variante, ledit apprentissage peut comprendre une étape de discrétisation dudit modèle.

Selon encore une autre variante, ledit apprentissage peut comprendre une étape de minimisation d'un critère quadratique.

Selon encore une autre variante, ledit apprentissage peut comprendre une étape de validation dudit modèle en utilisant un critère de qualité prédictive.

Selon un deuxième aspect, l'invention concerne un dispositif de gestion du fonctionnement d'au moins un actionneur de châssis d'un véhicule automobile, le dispositif comprenant au moins une unité de traitement d'informations, comprenant au moins un processeur, et un support de stockage de données configurés pour mettre en œuvre un procédé tel que décrit ci-dessus.

Selon un troisième aspect, l'invention concerne un programme d'ordinateur comprenant des instructions de code de programme pour l'exécution des étapes d'un procédé tel que décrit ci-dessus lorsque ledit programme est exécuté par au moins un processeur.

Selon un quatrième aspect, l'invention concerne un support utilisable dans un ordinateur sur lequel un programme tel que décrit ci-dessus est enregistré.

Selon un cinquième aspect, l'invention concerne un véhicule automobile qui embarque un dispositif tel que décrit ci-dessus.

### Brève description des figures

D'autres caractéristiques et avantages de l'invention apparaîtront à l'examen de la description détaillée ci-après, et des dessins annexés, sur lesquels :

    [Fig. 1] est une illustration schématique d'un véhicule automobile selon l'invention ;
    [Fig. 2] est un diagramme fonctionnel d'un dispositif selon l'invention ;

[Fig. 3] est un organigramme des étapes d'un procédé selon l'invention ;

[Fig. 4] est un schéma fonctionnel d'un modèle au sens de l'invention ;

[Fig. 5] sont des graphiques illustrant les performances d'un modèle au sens de l'invention ;

[Fig. 6] est un tableau stipulant les paramètres d'un modèle au sens de l'invention ; et

[Fig. 7] sont des graphiques illustrant les performances d'un modèle au sens de l'invention.

## Description détaillée de l'invention

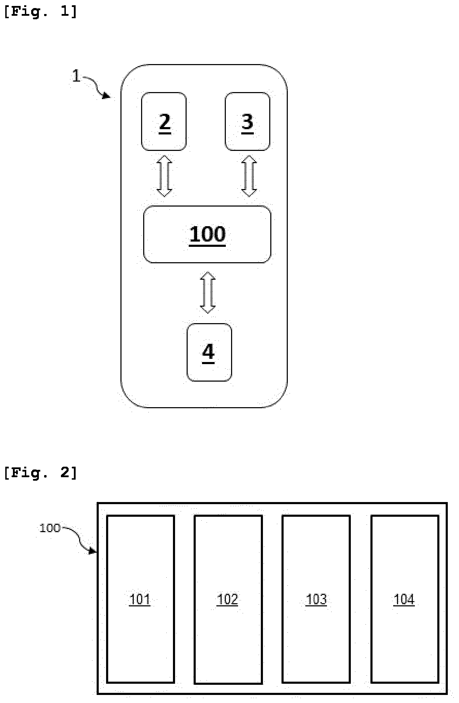

La figure 1 illustre schématiquement un véhicule automobile 1 selon l'invention. Celui-ci comprend un dispositif 100 de gestion du fonctionnement d'au moins un actionneur de châssis d'un véhicule automobile au sens de la présente invention, tel que décrit ci-dessous, qui met en œuvre un procédé de gestion du fonctionnement d'au moins un actionneur d'un véhicule automobile au sens de la présente invention, tel que décrit plus bas. Lors de la mise en œuvre du procédé, le dispositif 100 selon l'invention obtient dans un premier temps des données caractérisant l'angle du volant du véhicule et des données caractérisant la vitesse de lacet du véhicule, en interagissant pour ce faire au moyen d'un réseau de communication filaire du véhicule (e.g. CAN, Ethernet) - matérialisé par les flèches à double sens - avec, par exemple, un capteur d'angle volant 2 et un capteur de lacet 3 agencés dans le véhicule. Et c'est à partir de ces seules données que le dispositif 100 selon l'invention détermine avantageusement des données caractérisant l'angle de dérive du véhicule, en fonction desquelles il gère le fonctionnement d'au moins un actionneur de châssis 4 du véhicule. C'est ainsi que l'on permet la fourniture à moindre coût de systèmes d'aide la conduite de véhicules automobiles plus efficients et plus sûrs.

Le dispositif 100 de gestion du fonctionnement d'au moins un actionneur de châssis d'un véhicule automobile selon l'invention est illustré sur la figure 2. Il s'agit fondamentalement d'un appareil informatique qui comprend au moins une unité de traitement d'informations 101, comportant un ou plusieurs processeurs, un support de stockage de données 102, sur lequel est notamment enregistré un programme qui comprend des instructions de code de programme pour l'exécution des étapes du procédé selon l'invention décrit plus loin, et une interface d'entrée et sortie 103 permettant la réception et l'émission de données. De manière avantageuse, le dispositif 100 selon l'invention comprend également un module de détermination 104 qui a été préalablement entraîné par apprentissage supervisé comme on le verra plus bas.

Préférentiellement, le dispositif 100 selon l'invention est hébergé sur un calculateur indépendant et il interagit par le biais de son interface d'entrée et sortie 103 et au moyen d'un réseau de communication filaire du véhicule (e.g. CAN, Ethernet) - matérialisé sur la figure 1 par les flèches à double sens - avec le capteur d'angle volant 2 et le capteur de lacet 3. Alternativement, le dispositif 100 selon l'invention fait partie intégrante d'un calculateur du système d'aide à la conduite (non représenté) du véhicule 1.

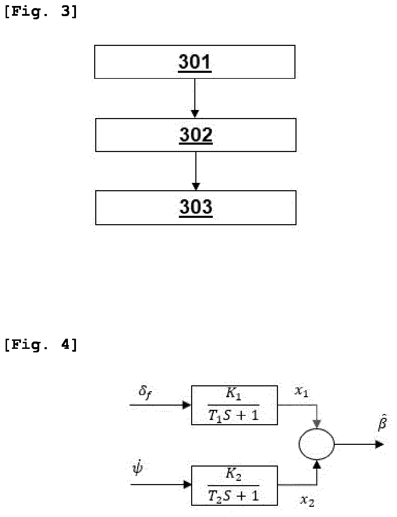

Selon l'invention, tous les éléments décrits ci-dessus contribuent pour permettre la mise en œuvre, à bord d'un véhicule automobile, d'un procédé de gestion du fonctionnement d'au moins un actionneur de châssis du véhicule, tel que décrit ci-dessous en lien avec les figures 3-6.

La figure 3 illustre au moyen d'un organigramme les étapes du procédé selon l'invention. Selon une première étape 301 du procédé selon l'invention, le dispositif 100 selon l'invention obtient des données caractérisant l'angle du volant du véhicule et des données caractérisant la vitesse de lacet du véhicule. Pour ce faire, le dispositif 100 selon l'invention interagit directement avec le capteur d'angle volant 2 et avec le capteur de lacet 3. Alternativement, il interagit avec le système d'aide à la conduite du véhicule, qui interagit à avec les capteurs 2, 3.

Selon une deuxième étape 302 du procédé selon l'invention, le dispositif 100 selon l'invention alimente son module de détermination 104 uniquement avec les données caractérisant l'angle du volant du véhicule et les données caractérisant la vitesse de lacet du véhicule précédemment obtenues afin d'obtenir des données caractérisant un l'angle de dérive du véhicule. Comme cela a été évoqué ci-dessus, le module de détermination 104 a été préalablement entraîné au moyen d'un apprentissage supervisé.

Plus spécifiquement, on a tout d'abord établi un modèle défini par un premier paramètre identifiant une contribution liée à l'angle du volant du véhicule, une première constante temporelle correspondante à cette première contribution, un deuxième paramètre identifiant une contribution liée à la vitesse de lacet du véhicule et une deuxième constante temporelle correspondante à cette deuxième contribution. Ce modèle est illustré sur la figure 4 au moyen d'un schéma fonctionnel, dans lequel $\delta_f$ est l'angle volant, $\dot{\psi}$ est la vitesse de lacet du véhicule, $K_1$ est la contribution en amplitude de l'angle volant $\delta_f$ dans l'estimation $\hat{\beta}$ de l'angle de dérive du véhicule, $T_1$ est la constante temporelle de cette contribution, $K_2$ est la contribution en amplitude de la vitesse de lacet $\dot{\psi}$ dans l'estimation $\hat{\beta}$ de l'angle de dérive du véhicule et $T_2$ est la constante temporelle de cette contribution.

Ensuite, des variables internes $x_1$ et $x_2$ ont été établies pour décrire la dynamique du modèle sous forme d'une représentation d'état. La représentation d'état ci-dessous (**Eq. 1**) facilite la description de la dynamique du modèle, l'identification des paramètres et une implémentation plus simple de la solution dans un calculateur ou autre unité de commande d'un véhicule automobile.

$$\begin{cases} \dot{x} = A(\theta)x + B(\theta)u \\ \hat{y} = Cx \end{cases} \quad (Eq.1)$$

avec

- $\theta = [\ K_1\ K_2\ T_1\ T_2]$ : le vecteur des paramètres du modèle

- $u = \begin{pmatrix} \delta_f \\ \dot{\psi} \end{pmatrix}$ : le vecteur des signaux d'entrée

- $x = \begin{pmatrix} x_1 \\ x_2 \end{pmatrix}$ : les variables d'état du modèle

- $\hat{y}$ : la sortie estimé ($\hat{y} = \hat{\beta}$ )
- $A(\theta)$ : matrice de la dynamique
- $B(\theta)$ : matrice de commande
- $C$ : matrice observation

Ensuite, on a dérivé les équations différentielles conduisant aux différentes matrices de la représentation d'état indiquée ci-dessus (*Eq.1*) :

-

$$\dot{x}_1 = -\frac{1}{T_1}x_1 + \frac{K_1}{T_1}\delta_f \ (Eq.\ 2)$$

-

$$\dot{x}_2 = -\frac{1}{T_2}x_2 + \frac{K_2}{T_2}\dot{\psi} \ (Eq.\ 3)$$

$$\hat{\beta} = x_1 + x_2 \ (Eq.\ 4)$$

Puis on a déduit $A(\theta)$ et $B(\theta)$ des deux premières équations indiquées ci-dessus (*Eq. 2, Eq. 3*) :

-

$$A(\theta) = \begin{bmatrix} -\frac{1}{T_1} & 0 \\ 0 & -\frac{1}{T_2} \end{bmatrix}$$

-

$$B(\theta) = \begin{bmatrix} \frac{K_1}{T_1} & 0 \\ 0 & \frac{K_1}{T_1} \end{bmatrix}$$

Et on a déduit l'expression de $C$ de la troisième équation indiquée ci-dessus (*Eq. 4*) : $C = [1\ 1]$.

On a par la suite réalisé une étape de discrétisation du modèle d'état indiqué plus haut (*Eq. 1*), qui est un modèle continu, préférentiellement en utilisant la méthode d'Euler, afin d'obtenir un modèle discret, tel que :

$$\begin{cases} x_{k+1} = A_d x_k + B_d u_k \\ \hat{y}_k = C_d x_k \end{cases} \quad (Eq.\ 5)$$

avec

-

$$A_d = I_2 + A(\theta)dt$$

-

$$B_d = B(\theta)dt$$

-

$$C_d = C$$

où *dt* est la période d'échantillonnage.

Puis, en désignant par $y_k$ une mesure de l'angle de dérive à l'instant *k* et $\hat{y}_k(\theta)$ l'estimation de l'angle de dérive déterminé en utilisant la représentation discrète du modèle (*Eq. 5*), l'identification de la valeur numérique du vecteur paramètre $\theta$ a été obtenue en minimisant sur une acquisition de données d'entraînement de taille N le critère quadratique mentionné ci-dessous (*Eq. 8*) :

-

$$\varepsilon_k(\theta) = y_k - \hat{y}_k(\theta) \quad (Eq.\ 6)$$

-

$$E(\theta) = [\varepsilon_1(\theta)\ \varepsilon_2(\theta)\ ....\ \varepsilon_N(\theta)\ ] \ (Eq.\ 7)$$

-

$$J(\theta) = \frac{1}{N}E(\theta)E(\theta)^T \quad (Eq.\ 8)$$

-

$$\theta = \underset{\theta}{\operatorname{argmin}} J(\theta) \quad (Eq.\ 9)$$

Le modèle obtenu est parfait, c'est-à-dire qu'il prédit l'angle de dérive réel du véhicule, si le critère de qualité prédictive K dans l'équation indiquée ci-dessous (*Eq. 10*) vaut zéro. Dans la pratique, il est rare d'obtenir un taux de prédiction de 100%. On a donc considéré que le modèle est validé pour une valeur de K proche de zéro :

$$K = \det\left(\frac{1}{N}E(\theta)E(\theta)^T\right)\left(\frac{1+\frac{n_\theta}{N}}{1-\frac{n_\theta}{N}}\right) \quad (Eq.\ 10)$$

où $n_\theta$ correspond au nombre de paramètre dans le modèle. Cette validation a été effectuée en utilisant d'autres données d'entraînement que celles utilisées pour identifier les paramètres du modèle.

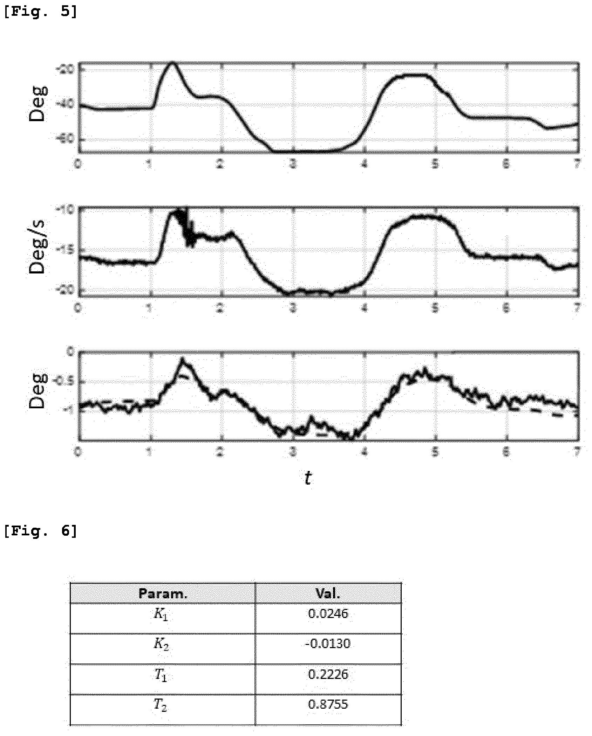

On a représenté sur la figure 5 les résultats de l'apprentissage supervisé sur la base du modèle illustré par le schéma bloc représenté sur la figure 4 et, sur la figure 6, les résultats d'identification des paramètres et des constantes du modèle. On voit sur la figure 5 l'évolution temporelle des données alimentant le module de détermination 104, à savoir l'angle du volant sur le graphique du haut, la vitesse de lacet sur le graphique du milieu et, sur le graphique du bas, l'angle de dérive mesuré en trait continu et l'angle de dérive déterminé par le module de détermination 104 du dispositif 100 selon l'invention en pointillés.

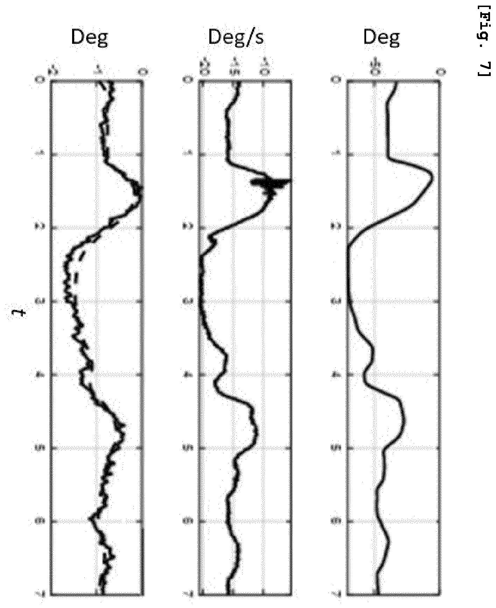

Enfin, on a vérifié le caractère prédictif du modèle en utilisant encore d'autres d'entraînement que celle utilisées pour l'identification. Le graphique du bas représenté sur la figure 7 montre l'angle de dérive mesuré en trait continu et l'angle de dérive déterminé par le module de détermination 104 du dispositif 100 selon l'invention en pointillés, tandis que le graphique du haut montre l'évolution de l'angle volant et le graphique du milieu montre l'évolution de la vitesse de lacet. Comme on le constate, le module de détermination 104 est capable de déterminer de manière précise l'angle de dérive du véhicule sur la base des seules données qui l'alimentent.

Grâce à cette manière d'entraîner le module de détermination 104, on obtient un modèle d'ordre réduit : les matrices $A_d$ et $B_d$ sont de taille 2x2. En outre, la mise en forme du modèle dans l'espace d'état (représentation d'état) simplifie l'implémentation dans un calculateur dans la mesure où une seule équation sera implémentée sur le calculateur, à savoir :

$$x_k = A_d x_{k-1} + B_d u_k \quad (Eq.\ 11)$$

avec

- $A_d$ la matrice de la dynamique obtenue par apprentissage
- $B_d$ la matrice de la commande obtenue par apprentissage.

Ainsi, l'apprentissage du module de détermination 104 va non seulement libérer de la mémoire mais aussi réduire la charge de calcul étant donné que la prédiction est faite via une seule ligne d'équation. L'apprentissage supervisé se focalise sur les dynamiques réelles nécessaires à la prédiction de l'angle de dérive, ce qui confère un meilleur taux de prédiction sans se confronter aux problématiques des hypothèses de simplification des modèle physiques (i.e. obtenu via les lois physiques), comme, entre autres, ceux qui se basent sur une modélisation des pneumatiques.

Enfin, selon une troisième étape 303 du procédé selon l'invention, le dispositif 100 selon l'invention gère le fonctionnement de l'actionneur de châssis 4 en fonction des données caractérisant l'angle de dérive du véhicule obtenues lors de la mise en œuvre de l'étape précédente du procédé.

Ainsi, grâce au procédé et au dispositif selon l'invention décrits ci-dessus, une solution est fournie pour pouvoir déterminer à moindre coût l'angle de dérive d'un véhicule automobile au cours de la conduite. Grâce à ces moyens, l'invention contribue ainsi à la fourniture de systèmes d'aide à la conduite de véhicules automobiles plus efficients et plus sûrs dans tous les types de véhicules, en particulier ceux qui s'adressent aux segments les moins aisés du marché.

**Revendications**

1. Procédé de gestion, par un dispositif informatique (100) embarqué à bord d'un véhicule automobile (1), du fonctionnement d'au moins un actionneur de châssis (4) du véhicule, **caractérisé en ce que** le procédé comprend les étapes de :

   i) obtenir des données caractérisant l'angle du volant du véhicule et des données caractérisant la vitesse de lacet du véhicule ;
   ii) alimenter un module de détermination (104) dudit dispositif uniquement avec les données caractérisant l'angle du volant du véhicule et les données caractérisant la vitesse de lacet du véhicule afin d'obtenir des données caractérisant un l'angle de dérive du véhicule, ledit module ayant été préalablement entraîné par apprentissage supervisé ; et
   iii) gérer le fonctionnement dudit actionneur en fonction des données caractérisant l'angle de dérive du véhicule.

2. Procédé selon la revendication 1, **caractérisé en ce que** ledit apprentissage est réalisé en établissant un modèle défini par un premier paramètre identifiant une contribution liée à l'angle du volant du véhicule et une première constante temporelle correspondante.

3. Procédé selon la revendication 2, **caractérisé en ce que** ledit modèle est défini par un deuxième paramètre identifiant une contribution liée à la vitesse de lacet du véhicule et une deuxième constante temporelle correspondante.

4. Procédé selon l'une des revendications 2-3, **caractérisé en ce que** ledit apprentissage comprend une étape de discrétisation dudit modèle.

**5.** Procédé selon l'une des revendications précédentes, **caractérisé en ce que** ledit apprentissage comprend une étape de minimisation d'un critère quadratique.

**6.** Procédé selon l'une des revendications précédentes, **caractérisé en ce que** ledit apprentissage comprend une étape de validation dudit modèle en utilisant un critère de qualité prédictive.

**7.** Dispositif (100) de gestion du fonctionnement d'au moins un actionneur de châssis d'un véhicule automobile, **caractérisé en ce que** le dispositif comprend au moins une unité de traitement d'informations (101), comprenant au moins un processeur, et un support de stockage de données (102) configurés pour mettre en œuvre un procédé selon l'une quelconque des revendications précédentes.

**8.** Programme d'ordinateur comprenant des instructions de code de programme pour l'exécution des étapes d'un procédé selon l'une quelconque des revendications 1 à 6 lorsque ledit programme est exécuté par au moins un processeur.

**9.** Support utilisable dans un ordinateur, **caractérisé en ce qu'**un programme selon la revendication 8 y est enregistré.

**10.** Véhicule automobile, **caractérisé en ce qu'**il embarque un dispositif selon la revendication 7.

[Fig. 1]

[Fig. 2]

[Fig. 3]

[Fig. 4]

[Fig. 5]

[Fig. 6]

| Param. | Val. |
|--------|------|
| $K_1$ | 0.0246 |
| $K_2$ | -0.0130 |
| $T_1$ | 0.2226 |
| $T_2$ | 0.8755 |

[Fig. 7]

Europäisches
Patentamt

European
Patent Office

Office européen
des brevets

**RAPPORT DE RECHERCHE EUROPEENNE**

Numéro de la demande

**EP 24 21 3415**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/001721 A1 (YAMAZAKI HIROO [JP]) 7 janvier 2021 (2021-01-07) * alinéas [0040] - [0050]; figures 1,5 * | 1-10 | INV. B60W40/103 B60W50/00 |
| A | Sharma Suchi ET AL: "Analysis and Performance Evaluation for Low Pass Filter Design Using Artificial Neural Network", , 31 décembre 2016 (2016-12-31), XP093183135, Extrait de l'Internet: URL:https://www.researchgate.net/publicati on/330703589_Analysis_and_Performance_Eval uation_for_Low_Pass_Filter_Design_Using_Ar tificial_Neural_Network * page 54 * | 1-10 | |
| A | SINGH M. A. ET AL: "Artificial Neural Network Use for Design Low Pass FIR Filter a Comparison", IJEEE, INTERNATIONAL JOURNAL OF ELECTRICAL AND ELECTRONICS ENGINEERING, vol. 3, no. 3, 1 janvier 2014 (2014-01-01) , XP093183169, ISSN: 2301-380X, DOI: 10.12720/ijeee.3.3.216-219 Extrait de l'Internet: URL:https://www.ijeee.net/uploadfile/2014/ 0711/20140711044156242.pdf> * page 216 * | 1-10 | DOMAINES TECHNIQUES RECHERCHES (IPC) B60W |

Le présent rapport a été établi pour toutes les revendications

| Lieu de la recherche | Date d'achèvement de la recherche | Examinateur |
|---|---|---|
| Munich | 2 avril 2025 | Stolle, Martin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 21 3415

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-04-2025

| Document brevet cité au rapport de recherche | Date de publication | Membre(s) de la famille de brevet(s) | | Date de publication |
|---|---|---|---|---|
| US 2021001721 A1 | 07-01-2021 | CN | 111801564 A | 20-10-2020 |
| | | EP | 3759457 A1 | 06-01-2021 |
| | | JP | 7090720 B2 | 24-06-2022 |
| | | JP | 2021518904 A | 05-08-2021 |
| | | US | 2021001721 A1 | 07-01-2021 |
| | | WO | 2019167264 A1 | 06-09-2019 |

EPO FORM P0460

Pour tout renseignement concernant cette annexe : voir Journal Officiel de l'Office européen des brevets, No.12/82